# EUROPÄISCHE PATENTSCHRIFT

(11) **EP 1 186 891 B1**
(45) Veröffentlichungstag und Bekanntmachung des Hinweises auf die Patenterteilung: **26.07.2006**
(21) Anmeldenummer: 00119174.1
(22) Anmeldetag: 05.09.2000
(51) Int. Cl.: G01N 35/04, B01L 9/00

(54) **Träger für eine Mikrotiterplatte**
Holder for microtiterplate
Support pour plaque de microtitrage

(43) Veröffentlichungstag der Anmeldung: 13.03.2002
(73) Patentinhaber: Tecan Trading AG, 8708 Männedorf (CH)
(72) Erfinder: Geiger, Alfred, 8915 Hausen am Albis (CH)
(74) Vertreter: OK pat AG

(56) Entgegenhaltungen:
- EP-A- 0 301 583
- EP-A- 0 396 115
- EP-A- 0 625 708
- WO-A-99/15905
- DE-A- 3 128 394
- US-A- 3 826 558
- US-A- 4 645 316
- US-A- 5 592 289
- US-A- 6 037 733

## Beschreibung

### Technisches Gebiet

Die Erfindung betrifft einen Träger für eine Mikrotiterplatte o. dgl.. Derartige Träger werden zur Aufnahme und zum Transport von Mikrotiterplatten, wie sie in Arbeitsstationen zur Handhabung und Bearbeitung von Flüssigkeitsproben, z. B. zum Pipettieren verwendet werden, eingesetzt.

### Stand der Technik

Es sind Träger für Mikrotiterplatten bekannt, bei denen die Trägerplatte fest auf der Basis montiert ist. Bei einer Mikrotiterplatte mit vielen und entsprechend kleinen Kavitäten kann jedoch bei auch nur leichter durch Montage- oder Fertigungstoleranzen verursachter Schrägstellung eine exakte und zuverlässige Bearbeitung der Proben nicht mehr sichergestellt werden. So kann etwa bei gezielter Flüssigkeitsabgabe in die Kavitäten nicht ausgeschlossen werden, dass einzelne derselben verfehlt werden.

US 3,826, 558 offenbart einen Träger gemäß dem Oberbegriff des Anspruches 1. DE 31 28 394 A1 offenbart eine Druckplatte, welche mit einer Basis über ein feststellbares Kugelgelenk verbunden ist. Die Druckplatte wird zur Druckprüfung von Proben benutzt. Das Kugelgelenk wird durch die Prüflast festgestellt.

### Darstellung der Erfindung

Der Erfindung liegt die Aufgabe zu Grunde, einen gattungsgemässen Träger anzugeben, der auch bei Verwendung von sehr viele und sehr kleine Kavitäten aufweisenden Mikrotiterplatten, wie sie heute zunehmend üblich sind, eine zuverlässige und exakte Bearbeitung der Flüssigkeitsproben erlaubt.

Dies wird durch eine Ausbildung des Trägers gemäß Anspruch 1 erreicht, die eine Einstellung der räumlichen Ausrichtung der die Mikrotiterplatte aufnehmenden Trägerplatte gestattet, so dass allfällige Abweichungen derselben von einer Sollausrichtung korrigiert werden können. Der erfindungsgemässe Träger ermöglicht insbesondere die zuverlässige automatische Bearbeitung von Norm-Mikrotiterplatten mit 48x32 Kavitäten.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: eine Seitenansicht einer Arbeitsstation mit erfindungsgemässen Trägern,
- Fig. 2: vergrössert einen Schnitt ungefähr längs II-II in Fig. 1 durch einen erfindungsgemässen Träger mit verriegelter Mikrotiterplatte und seine Verankerung an der Arbeitsstation - im Bereich der Trägerplatte folgt der Schnitt II-II in Fig. 4,
- Fig. 3: einen Schnitt längs III-III in Fig. 2 durch den erfindungsgemässen Träger bei verriegelter Mikrotiterplatte,
- Fig. 4: eine Draufsicht auf den erfindungsgemässen Träger mit verriegelter Mikrotiterplatte,
- Fig. 5: einen Teilschnitt längs V-V in Fig. 4 durch den erfindungsgemässen Träger mit verriegelter Mikrotiterplatte,
- Fig. 6a: einen Schnitt längs VI-VI in Fig. 2 durch den erfindungsgemässen Träger bei verriegelter Mikrotiterplatte,
- Fig. 6b: einen Schnitt durch den erfindungsgemässen Träger enstsprechend Fig. 6a, aber bei entriegelter Mikrotiterplatte,
- Fig. 7a: eine Unteransicht des erfindungsgemässen Trägers bei verriegelter Mikrotiterplatte,
- Fig. 7b: eine Unteransicht des erfindungsgemässen Trägers entsprechend Fig. 7a, aber bei entriegelter Mikrotiterplatte.

### Wege zur Ausführung der Erfindung

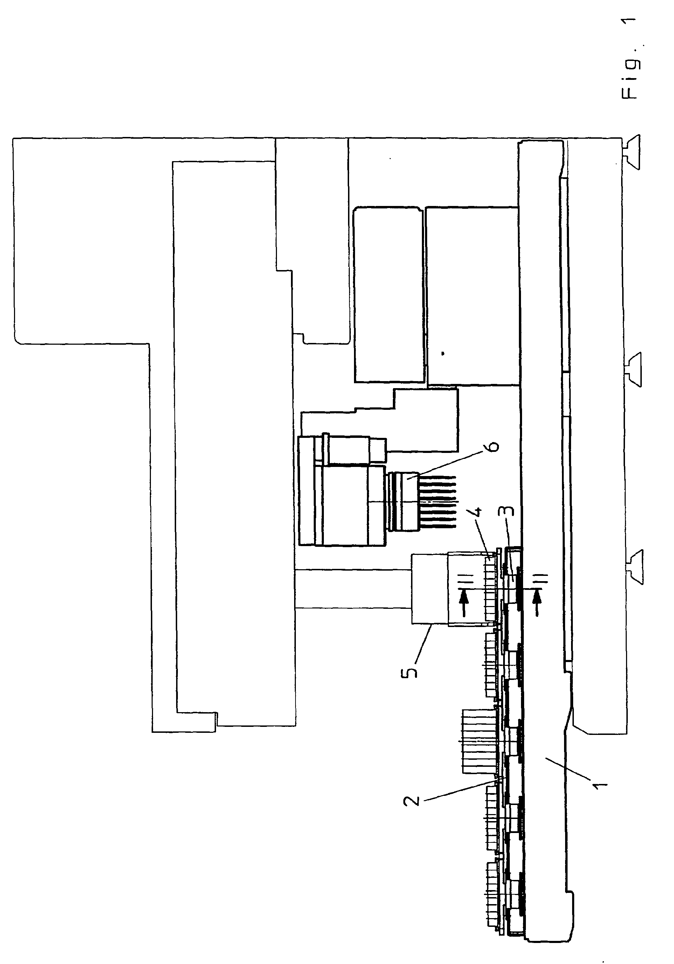

Eine Arbeitsstation weist (Fig. 1) einen Tisch 1 auf, auf welchem mehrere parallele Schlitten 2 (in Fig. 1 ist einer davon längsgeschnitten dargestellt) mit jeweils mehreren Trägern 3, die jeweils eine Mikrotiterplatte 4 tragen, längsverschieblich gelagert sind. Oberhalb des Tisches 1 ist heb- und senkbar sowie seitlich, d. h. quer zur Längsrichtung der Schlitten 2 verschiebbar ein Manipulator 5 aufgehängt, ausserdem, ebenfalls heb- und senkbar, ein Pipettierkopf 6. Der Manipulator 5 kann an einer Be- und Entladestelle eine Mikrotiterplatte 4 von einem Träger 3 auf dem Schlitten 2 abheben, seitlich verschieben und auf einem Träger eines anderen Schlittens oder an einer anderen Stelle des Tisches 1 absetzen. Wird ein Träger mit einer Mikrotiterplatte durch Längsverschiebung des entsprechenden Schlittens 2 unter den Pipettierkopf 6 geschoben, so kann derselbe zur Mikrotiterplatte abgesenkt werden und Probenflüssigkeit in die Kavitäten der Mikrotiterplatte abgeben oder auch aus denselben Reagenzien ansaugen.

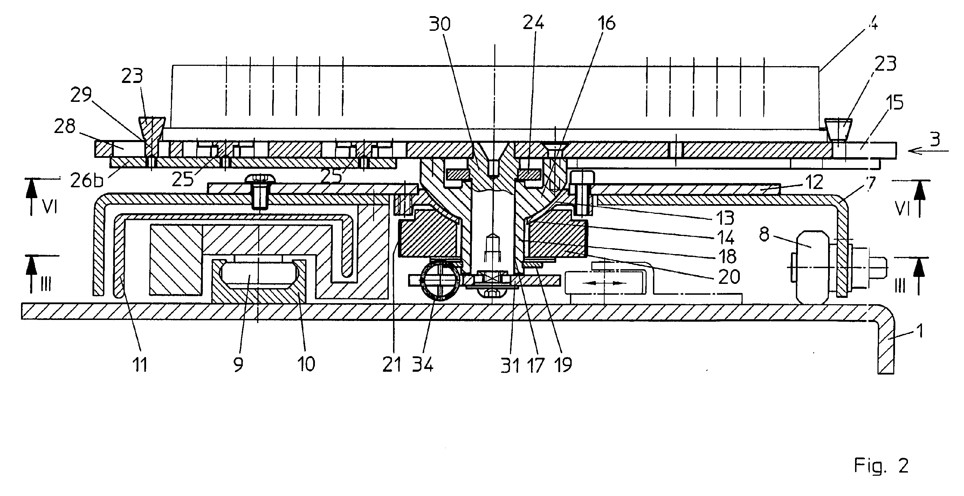

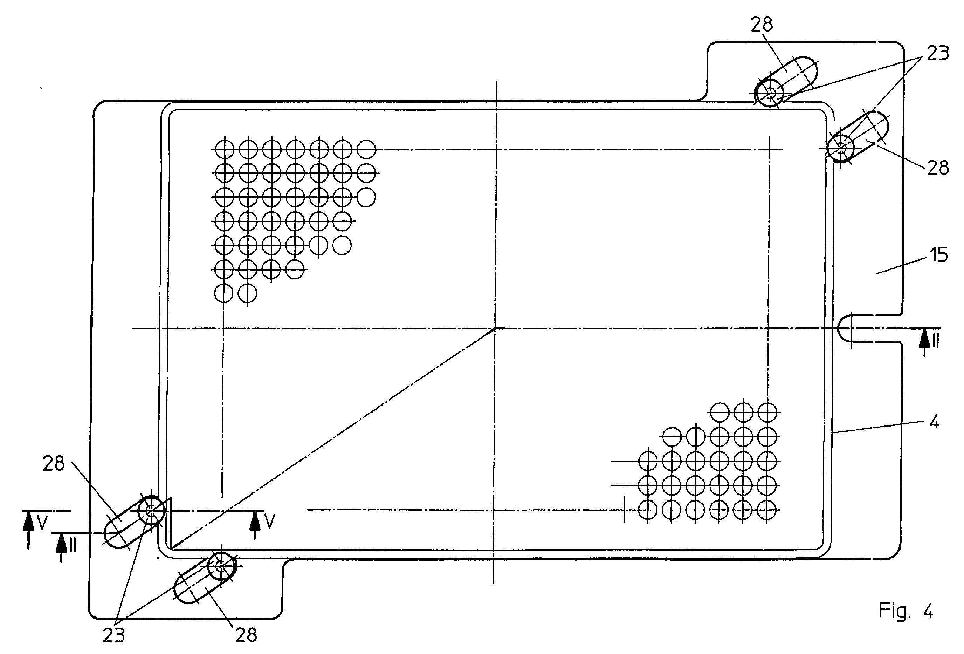

Der Schlitten 2 weist (Fig. 2, 3) ein Trägerprofil 7 auf, welches auf der einen Seite mit Tragrollen 8 versehen ist, mittels welcher der Schlitten 2 auf dem Tisch 1 verschiebbar abgestützt ist und auf der anderen Seite mit Führungsrollen 9, die mit einer auf dem Tisch 1 befestigten Führungsschiene 10 eingreifen. Die Führungsschiene 10 und die Führungsrollen 9 sind durch ein ebenfalls am Tisch 1 verankertes Abdeckprofil 11 geschützt. Der Träger 3 hat (Fig. 2) eine Basis, welche als rechteckige Auflageplatte 12 ausgebildet und am Trägerprofil 7 befestigt ist. In einer mittigen Oeffnung derselben ist eine nach oben offene schalenförmige Gelenkspfanne 13 aus Metall, z. B. Aluminium mit einer kreisförmigen mittigen Oeffnung 14 angebracht.

Eine ebenfalls ungefähr rechteckige Trägerplatte 15, die die Mikrotiterplatte 4 trägt, weist an ihrer Unterseite einen Gelenkskopf 16 aus Kunststoff, z. B. Polyoxymethylen auf, welcher satt in der Gelenkspfanne 13 liegt, derart, dass ein kugelzonenförmiger Teil seiner Aussenfläche an der entsprechend geformten Innenfläche der Gelenkspfanne 13 anliegt. Der Gelenkskopf 16 weist eine vertikal durchgehende mittige Bohrung 17 auf, welche sich durch einen an der Unterseite angeformten Fortsatz desselben, einen rohrförmigen Stutzen 18, der mit seitlichem Spiel durch die Oeffnung 14 der Gelenkspfanne 13 ragt, fortsetzt.

Der Stutzen 18 trägt nahe seinem unteren Ende einen ringförmigen Anschlag 19, auf welchem ein als Klemmring 20 aus einem elastischen Material, vorzugsweise Kunststoff wie z. B. Polypropylen ausgebildetes Klemmteil abgestützt ist. Der Klemmring 20 liegt mit einem kugelzonenförmigen Teil seiner Oberseite satt an der entsprechend geformten Aussenfläche der Gelenkspfanne 13 an. Er ist von einer an seiner Aussenseite anliegenden Bride 21 umgeben, welche mittels einer Feststellschraube 22 spannbar ist.

Bei gelockerter Bride 21 liegt der Gelenkskopf 16 lose in der Gelenkspfanne 13, so dass die Trägerplatte 15 über einen Raumwinkelbereich, dessen Grenzen durch die Aussenseite des Stutzens 18 und den Rand der Oeffnung 14 in der Gelenkspfanne 13 bestimmt sind, frei drehbar ist, wobei der Drehpunkt auf der Höhe der Oberseite der Trägerplatte 15 liegt, und zwar im Mittelpunkt derselben. Die Trägerplatte 15 ist damit insbesondere um eine vertikale Achse durch den Mittelpunkt drehbar und um beliebige, z. B. in Längsrichtung oder Querrichtung auf der Höhe der Oberseite der Trägerplatte 15 verlaufende Achsen kippbar.

Bei gespannter Bride 21 dagegen drückt der Klemmring 20 gegen die Aussenseite der Gelenkspfanne 13, die zwischen demselben und dem Gelenkskopf 16 geklemmt wird. Das Gelenk ist mithin festgestellt und die räumliche Ausrichtung der Trägerplatte 15 bezüglich der Auflageplatte 12 und damit auch des Schlittens 2 fix. Das von der Gelenkspfanne 13 und dem Gelenkskopf 16 gebildete Kugelgelenk erlaubt also eine Einstellung der Trägerplatte 15 auf eine genau auf andere Komponenten wie z. B. den Manipulator 5 und vor allem den Pipettierkopf 6 abgestimmte Lage, die durch Spannen der Bride 21 mittels der Feststellschraube 22 fixierbar ist.

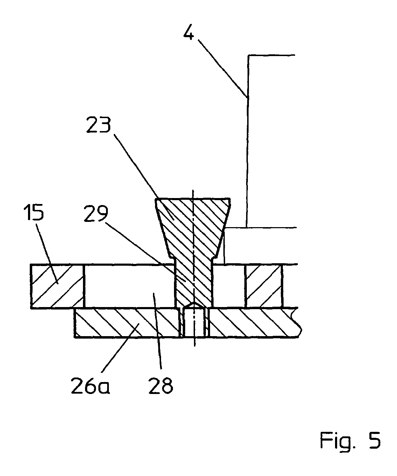

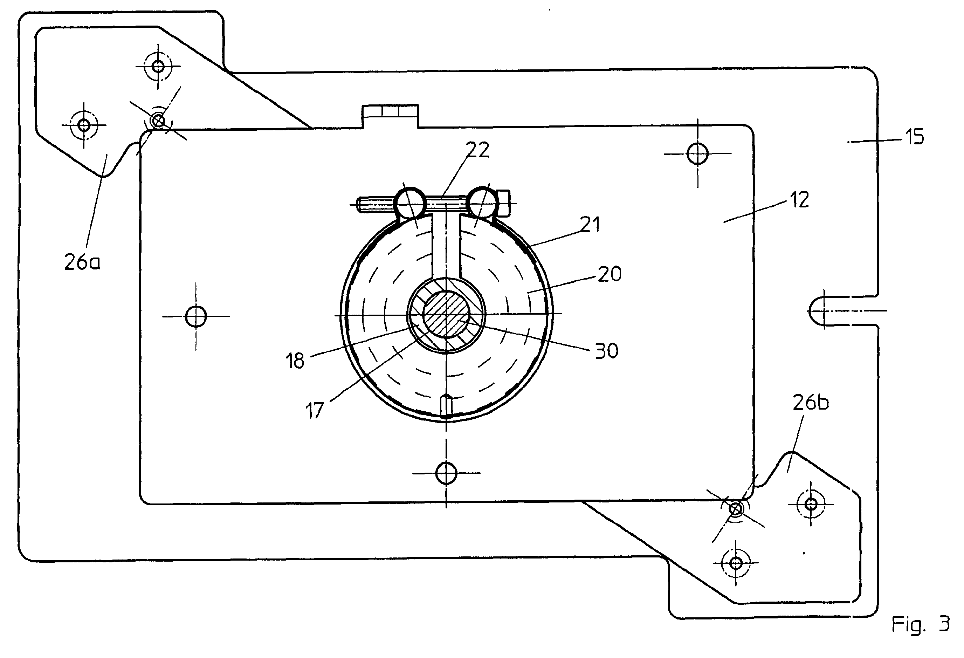

Die Trägerplatte 15 weist (s. a. Fig. 4, 5) an der Oberseite zwei in einander gegenüberliegenden Ecken angeordnete Zentrieranschläge auf, welche längs einer sie verbindenden Diagonale gegengleich nach aussen verschiebbar sind, so dass sie stets gleichen Abstand vom mit dem Drehpunkt der Trägerplatte 15 zusammenfallenden Mittelpunkt haben. Jeder der Zentrieranschläge besteht aus zwei sich nach unten konisch verengenden Zentrierköpfen 23, welche quer zur besagten Diagonale voneinander beabstandet sind.

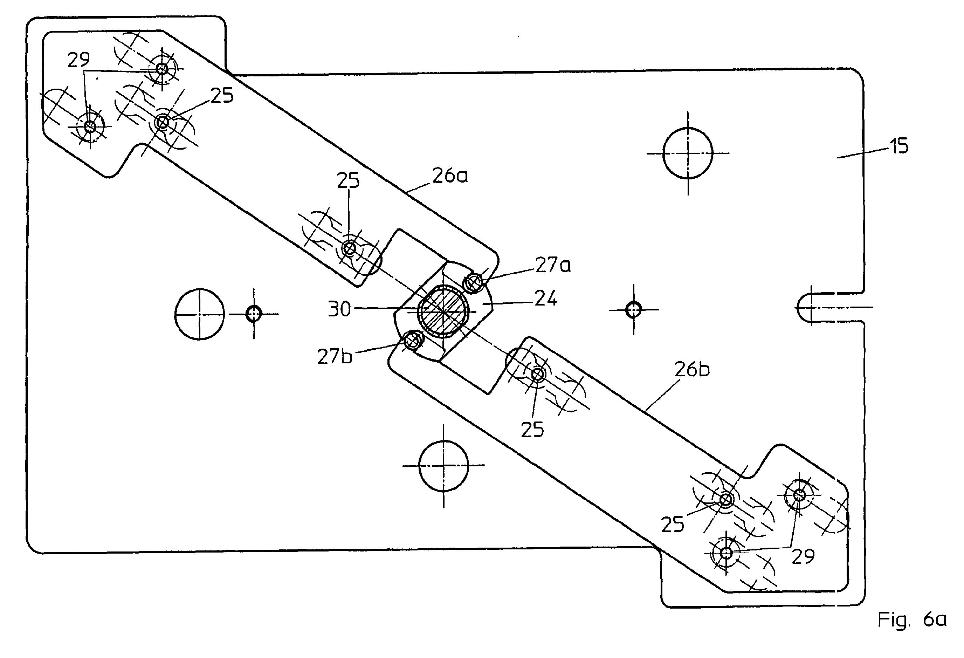

Die gegengleiche Bewegung wird (s. Fig. 6a) durch eine an der Unterseite der Trägerplatte 15 angebrachte Kupplung gesteuert, welche einen Kupplungshebel 24 umfasst, der um eine durch den Mittelpunkt der Trägerplatte 15 verlaufende senkrechte Achse drehbar mit derselben verbunden ist, sowie zwei durch Führungsstifte 25 diagonal verschiebbar an derselben gelagerte Schieber 26a,b, die jeweils mit Mitnehmerstiften 27a,b in diametral gegenüberliegend am Kupplungshebel 24 angebrachte Ausnehmungen eingreifen. An ihren äusseren Enden tragen die Schieber 26a,b die Zentrierköpfe 23, die über durch Schlitze 28 in der Trägerplatte 15 ragende Schäfte 29 an ihnen befestigt sind.

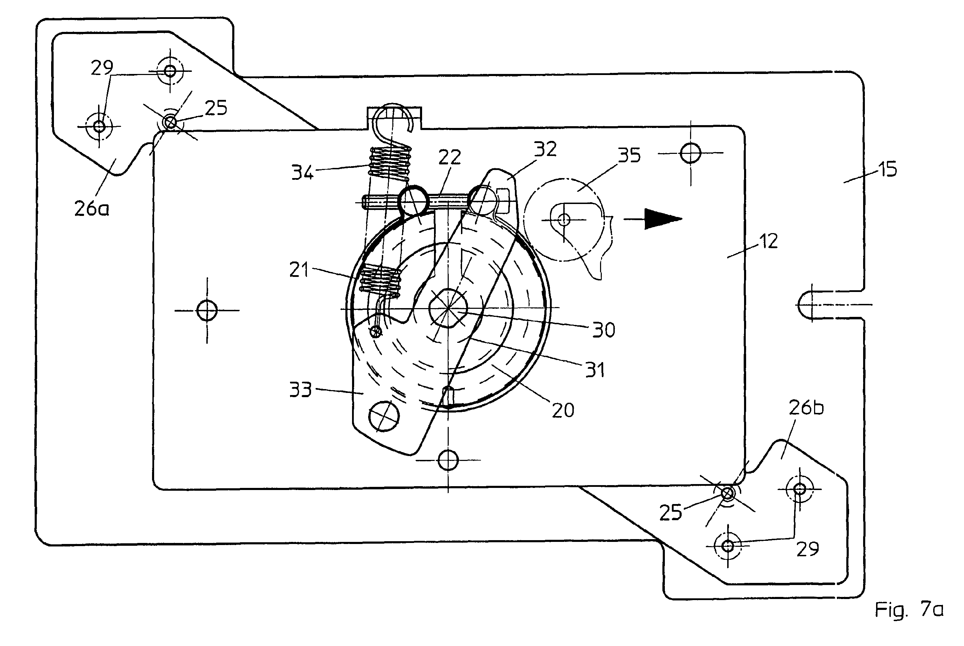

Der Kupplungshebel 24 sitzt an einer senkrechten Welle 30, deren oberes Ende mittig an der Unterseite der Trägerplatte 15 drehbar befestigt ist und welche im weiteren durch die Bohrung 17 (Fig. 2) im Gelenkskopf 16 und Stutzen 18 geführt ist. Unmittelbar anschliessend an das Ende des Stutzens 18 (s. Fig. 7a) trägt die Welle 30 als Betätigungsteil einen Betätigungshebel 31 mit einem freien ersten Arm 32 und einem zweiten Arm 33, an welchem eine an der Auflageplatte 12 verankerte Spiralfeder 34 angreift. Diese übt einen Zug auf den Betätigungshebel 31 aus, der ihn und damit über die Welle 30 auch den Kupplungshebel 24 und die Schieber 26a,b in der Verriegelungsstellung (Fig. 6a, 7a) hält, in der die Zentrieranschläge gegen den Rand der Mikrotiterplatte 4 drücken, wobei zwischen den Stellen, die von den beiden Zentrierköpfen 23 eines Zentrieranschlags berührt werden, jeweils eine Ecke der Mikrotiterplatte 4 liegt.

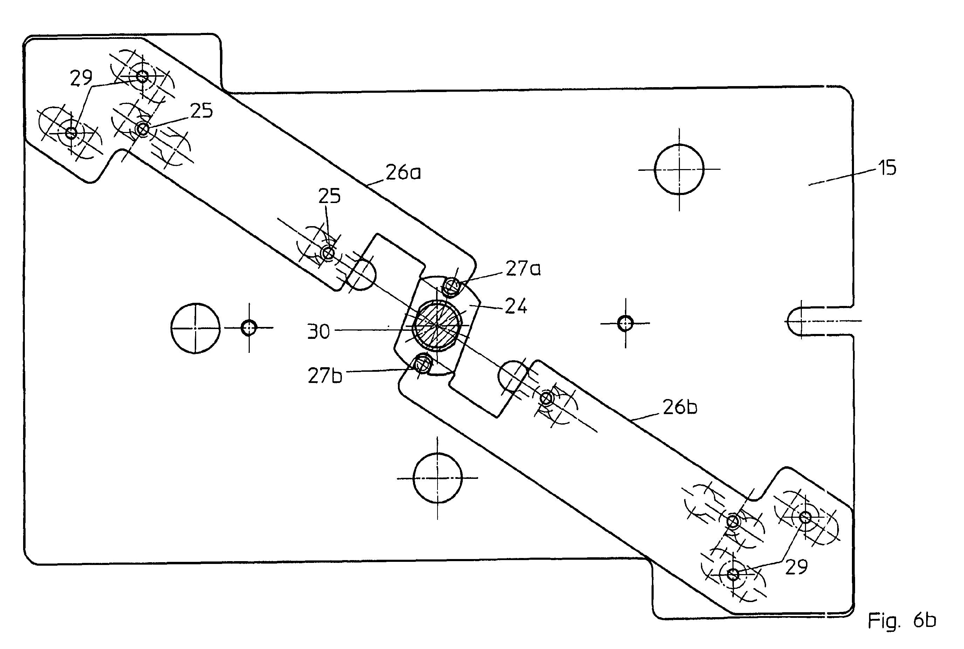

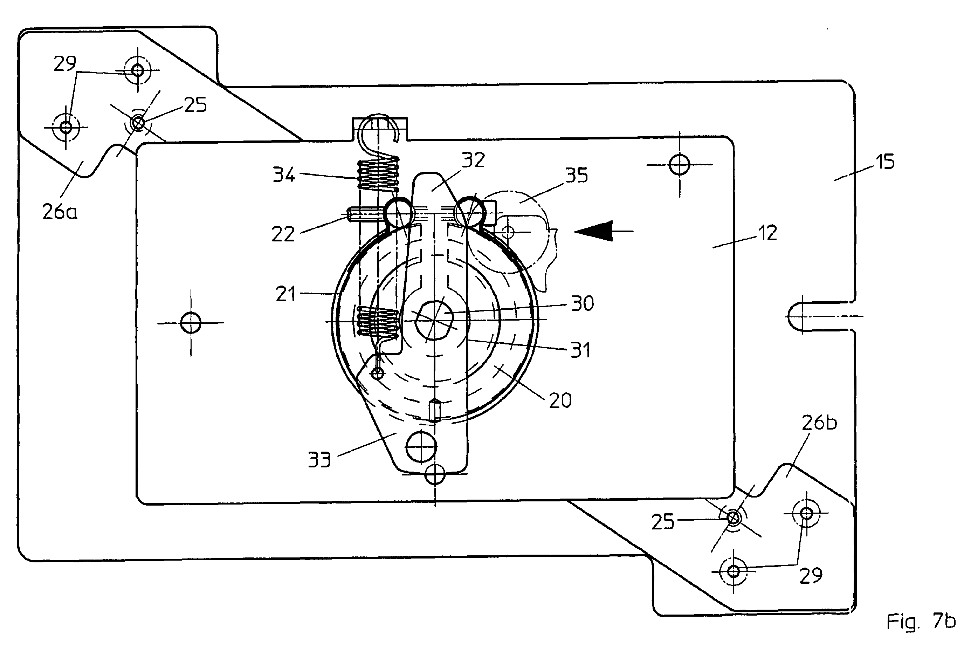

Wird der Betätigungshebel 31 nun z. B. mittels einer vorschieb- und zurückziehbar am Tisch 1 gelagerten, auf seinen ersten Arm 32 wirkenden Betätigungsrolle 35 oder eines anderen Betätigungselements oder auch -anschlags entgegen der Rückstellkraft der Spiralfeder 34 (in Fig. 7a im Gegenuhrzeigersinn) gedreht, so werden durch gleichsinnige Drehung des Kupplungshebels 24 die Schieber 26a,b nach aussen in eine Entriegelungsstellung (Fig. 6b, 7b) verschoben, in der die Zentrieranschläge mindestens annähernd ihre äussere Grenzstellung annehmen, in der sie vom Rand der Mikrotiterplatte frei sind. Sie sind daher nicht im Weg, wenn nun die Mikrotiterplatte z. B. mittels des Manipulators 5 von der Trägerplatte 15 abgehoben und eine andere Mikrotiterplatte auf derselben abgestellt wird.

Sobald die Einwirkung auf den Betätigungshebel 31 aufhört, wird er durch die Rückstellkraft der Spiralfeder 34 in seine Grundstellung zurückgezogen, was eine entsprechende Drehung des Kupplungshebels 24 und ein Zurückschieben der Zentrieranschläge gegen den Mittelpunkt der Trägerplatte 15 hin bewirkt, wobei die auf derselben abgestellte Mikrotiterplatte durch dieselben soweit erforderlich verschoben und gedreht wird, bis die Zentrieranschläge beidseits an die Ränder derselben anstossen und sie vollständig zentriert ist.

### Bezugszeichenliste

- 1: Tisch
- 2: Schlitten
- 3: Träger
- 4: Mikrotiterplatte
- 5: Manipulator
- 6: Pipettierkopf
- 7: Trägerprofil
- 8: Tragrolle
- 9: Führungsrolle
- 10: Führungsschiene
- 11: Abdeckprofil
- 12: Auflageplatte
- 13: Gelenkspfanne
- 14: Oeffnung
- 15: Trägerplatte
- 16: Gelenkskopf
- 17: Bohrung
- 18: Stutzen
- 19: Anschlag
- 20: Klemmring
- 21: Bride
- 22: Feststellschraube
- 23: Zentrierkopf
- 24: Kupplungshebel
- 25: Führungsstift
- 26a,b: Schieber
- 27a,b: Mitnehmerstifte
- 28: Schlitz
- 29: Schaft
- 30: Welle
- 31: Betätigungshebel
- 32: erster Arm
- 33: zweiter Arm
- 34: Spiralfeder
- 35: Betätigungsrolle

## Patentansprüche

1. Träger für eine Mikrotiterplatte (4) o. dgl., mit einer Basis und einer Trägerplatte (15), welche mit der Basis über ein feststellbares Kugelgelenk beschränkt kipp- und/oder drehbar verbunden ist, wobei der Drehpunkt auf der Höhe der Oberseite der Trägerplatte (15) liegtund das Kugelgelenk eine mit der Basis verbundene Gelenkspfanne (13) sowie einen in derselben gelagerten, mit der Trägerplatte (15) verbundenen Gelenkskopf (16) umfasst, und wobei ein kugelzonenförmiger Teil der äusseren Oberfläche des Gelenkskopfs (16) an der entsprechend geformten Innenfläche der Gelenkspfanne (13) anliegt, **dadurch gekennzeichnet, dass** der Gelenkskopf (16) an seiner Unterseite einen angeformten Stutzen (18) umfasst, der durch eine Öffnung (14) der Gelenkspfanne (13) ragt und einen Anschlag (19) trägt, auf welchem ein Klemmteil abgestützt ist, welches an der Aussenseite der Gelenkspfanne (13) anliegt und zur Feststellung des Kugelgelenks an dieselbe andrückbar ist.

2. Träger nach Anspruch 1, **dadurch gekennzeichnet, dass** der Anschlag (19) ringförmig und das Klemmteil als Klemmring (20) ausgebildet ist.

3. Träger nach Anspruch 2, **dadurch gekennzeichnet, dass** der Klemmring (20) aus einem elastischen Material ausgebildet und von einer zum Andrücken desselben an die Gelenkspfanne (13) spannbaren Bride (21) umgeben ist.

4. Träger nach Anspruch 3, **dadurch gekennzeichnet, dass** die Bride (21) mittels einer Feststellschraube (22) spannbar ist.

5. Träger nach einem der Ansprüche 1 bis 4, **dadurch gekennzeichnet, dass** der Gelenkskopf (16) und der Stutzen (18) eine vertikal durchgehende, mittige Bohrung (17) aufweist, in welcher eine senkrechte Welle (30) drehbar geführt ist, wobei diese senkrechte Welle (30) im Bereich ihres oberen Endes einen Kupplungshebel (24) und im Bereich ihres unteren Endes ein Betätigungsteil trägt; wobei der Kupplungshebel (24) an einander diametral gegenüberliegenden Punkten an zwei diagonal unter der Trägerplatte (15) beweglichen Schiebern (26a, 26b) eingreift und jeder Schieber (26a,26b) an seinem äusseren Ende einen auf der oberen Seite der Trägerplatte (15) angeordneten Zentrieranschlag trägt; wobei die beiden Zentrieranschläge in einander gegenüberliegenden Ecken der Trägerplatte (15) angeordnet und längs einer sie verbindenden Diagonale der Trägerplatte (15) gegengleich gegenüber einem mittig zwischen ihnen liegenden Mittelpunkt verschiebbar sind.

6. Träger nach Anspruch 5, **dadurch gekennzeichnet, dass** jeder Zentrieranschlag ein Paar von Zentrierköpfen (23) umfasst, die quer zur Verschiebungsrichtung voneinander beabstandet sind.

7. Träger nach Anspruch 6, **dadurch gekennzeichnet, dass** sich die Zentrierköpfe (23) jeweils nach unten konisch verengen.

8. Träger nach einem der Ansprüche 5 bis 7, **dadurch gekennzeichnet, dass** die Zentrieranschläge durch Einwirkung auf das an der Unterseite des Trägers (3) angeordnete Betätigungsteil verschiebbar sind.

9. Träger nach einem der Ansprüche 5 bis 8, **dadurch gekennzeichnet, dass** das Betätigungsteil als an der Welle (30) befestigter Betätigungshebel (31) ausgebildet ist.

10. Träger nach einem der Ansprüche 5 bis 9, **dadurch gekennzeichnet, dass** der Verschiebung der Zentrieranschläge vom Zentrum weg eine elastische Rückstellkraft entgegenwirkt.

11. Träger nach Anspruch 10, **dadurch gekennzeichnet, dass** die Rückstellkraft durch eine Feder hergestellt ist, welche am Betätigungshebel (31) angreift.

12. Träger nach einem der vorhergehenden Ansprüche, **dadurch gekennzeichnet, dass** der Gelenkskopf (16) und der Stutzen (18) in einem Stück gefertigt sind.

13. Träger nach einem der vorhergehenden Ansprüche**, dadurch gekennzeichnet, dass** die Gelenkspfanne (13) schalenförmig ausgebildet ist und ihre äussere Oberfläche nahe der Öffnung (14), durch welche der Stutzen (18) des Gelenkskopfs (16)ragt, sich im wesentlichen parallel zu der inneren Oberfläche erstreckt.

14. Träger nach einem der vorhergehenden Ansprüche, **dadurch gekennzeichnet, dass** der Gelenkskopf (16) und der Stutzen (18) aus Kunststoff gefertigt sind und dass die Gelenkspfanne (13) aus einem Metall gefertigt ist.

## Claims

1. Holder for a microtiter plate (4) or similar, with a base and a support plate (15) which is attached to the base via a lockable ball joint free to turn and/or tilt within limits, with the centre of rotation located at the height of the upper surface of the support plate (15) and with the ball joint comprising a joint socket (13) which is attached to the base and contains fitted inside it a joint element (16) attached to the support plate (15), and in which a part of the outer surface of the joint element (16), having the shape of a zone of a sphere, is in contact with the correspondingly shaped inner surface of the joint socket (13), **characterized in that** the joint element (16) comprises a connection piece (18) formed onto it on its underside which protrudes through an opening (14) in the joint socket (13) and carries a stop (19) on which rests a clamping part which is in contact with the outer surface of the joint socket (13) and can be pressed against the latter in order to fix it.

2. Holder according to Claim 1, **characterized in that** the stop (19) is ring-shaped and the clamping part takes the form of a clamping ring (20).

3. Holder according to Claim 2, **characterized in that** the clamping ring (20) is made from an elastic material and is surrounded by a flange (21) that can be tightened to press it against the joint socket (13).

4. Holder according to Claim 3, **characterized in that** the flange (21) can be tightened by means of a locking screw (22).

5. Holder according to any one of Claims 1 to 4, **characterized in that** the joint element (16) and the connection piece (18) display a central hole (17) bored through them in which is rotatably guided a vertical shaft (30), this vertical shaft (30) bearing near its upper end a coupling lever (24) and in the vicinity of its lower end an actuating element; wherein the coupling lever (24) engages with two diagonally opposite movable sliders (26a, b) at diametrically opposite points under the support plate (15) and each of the sliders (26a, b) carries at its outer end a centring stop situated on the upper side of the support plate (15); and wherein the two centring stops are arranged at opposite corners of the support plate (15) and can be moved in diametrically opposed directions along a common diagonal of the support plate (15) towards a centre at the mid-point between them.

6. Holder according to Claim 5, **characterized in that** each centring stop comprises a pair of centring studs (23) separated from each other at right angles to their direction of movement.

7. Holder according to Claim 6, **characterized in that** the centring studs (23) both taper conically downwards.

8. Holder according to any one of Claims 5 to 7, **characterized in that** the centring stops can be moved by acting upon the actuating element arranged on the underside of the support (3).

9. Holder according to any one of Claims 5 to 8, **characterized in that** the actuating element takes the form of an actuating lever (31) fastened to the shaft (30).

10. Holder according to any one of Claims 5 to 9, **characterized in that** movement of the centring stops away from the centre is opposed by a restoring force.

11. Holder according to Claim 10, **characterized in that** the restoring force is generated by a spring engaging with the actuating lever (31).

12. Holder according to any one of the above Claims, **characterized in that** the joint element (16) and the connection piece (18) are manufactured as a single piece.

13. Holder according to any one of the above Claims, **characterized in that** the joint socket (13) is bowl-shaped and its outer surface in the region of the opening (14) through which protrudes the connection piece (18) of the joint element (16) is essentially parallel to the inner surface.

14. Holder according to any one of the above Claims, **characterized in that** the joint element (16) and the connection piece (18) are made of plastic and the joint socket (13) is made of metal.

## Revendications

1. Support pour plaque de microtitration (4) ou équivalent, comportant une base et une plaque de support (15) qui est reliée à la base par une articulation sphérique verrouillable de façon à pouvoir basculer et pivoter de façon limitée, le point de pivotement se trouvant à la hauteur de la face supérieure de la plaque de support (15) et l'articulation sphérique comportant un coussinet à rotule (13) relié à la base et une tête articulée (16) logée dans celui-ci et reliée à la plaque de support (15), et dans lequel une partie en forme de zone sphérique de la surface externe de la tête articulée (16) repose au niveau de la surface interne formée de façon correspondante du coussinet à rotule (13), **caractérisé en ce que** la tête articulée (16) comprend au niveau de sa face inférieure un manchon (18) façonné qui dépasse par une ouverture (14) du coussinet à rotule (13) et porte une butée (19) sur laquelle est appuyé un élément de serrage qui repose au niveau de la face externe du coussinet à rotule (13) et peut être comprimé contre celui-ci pour bloquer l'articulation sphérique.

2. Support selon la revendication 1, **caractérisé en ce que** la butée (19) est exécutée en forme d'anneau et **en ce que** l'élément de serrage est exécuté en forme d'anneau de serrage (20).

3. Support selon la revendication 2, **caractérisé en ce que** l'anneau de serrage (20) est élaboré dans un matériau élastique et est entouré par une bride (21) pouvant être tendue pour comprimer celui-ci contre le coussinet à rotule (13).

4. Support selon la revendication 3, **caractérisé en ce que** la bride (21) peut être tendue au moyen d'une vis de blocage (22).

5. Support selon l'une des revendications 1 à 4, **caractérisé en ce que** la tête articulée (16) et le manchon (18) présentent un perçage central (17) traversant verticalement dans lequel est guidé un arbre vertical (30) de façon à pivoter, cet arbre vertical (30) portant dans la zone de son extrémité supérieure un levier d'accouplement (24) et dans la zone de son extrémité inférieure un élément d'actionnement ; dans lequel le levier d'accouplement (24) s'engage au niveau de points diamétralement opposés sur deux barres (26a, 26b) mobiles en diagonale sous la plaque de support (15), et chaque barre (26a, 26b) porte au niveau de son extrémité externe une butée de centrage disposée sur la face supérieure de la plaque de support (15) ; dans lequel les deux butées de centrage sont disposées dans des coins opposés de la plaque de support (15) et peuvent être déplacées le long d'une diagonale, qui les relie, de la plaque de support (15) de façon diamétralement opposée par rapport à un point médian situé entre les deux.

6. Support selon la revendication 5, **caractérisé en ce que** chaque butée de centrage comprend une paire de têtes de centrage (23) qui sont écartées l'une de l'autre transversalement à la direction de déplacement.

7. Support selon la revendication 6, **caractérisé en ce que** les têtes de centrage (23) se rétrécissent respectivement vers le bas en cône.

8. Support selon l'une des revendications 5 à 7, **caractérisé en ce que** les butées de centrage peuvent être déplacées par l'action sur l'élément d'actionnement disposé au niveau de la face inférieure du support (3).

9. Support selon l'une des revendications 5 à 8, **caractérisé en ce que** l'élément d'actionnement est exécuté en tant que levier d'actionnement (31) fixé au niveau de l'arbre (30).

10. Support selon l'une des revendications 5 à 9, **caractérisé en ce que** le déplacement des butées de centrage en s'éloignant du centre s'oppose à une force de rappel élastique.

11. Support selon la revendication 10, **caractérisé en ce que** la force de rappel est réalisée par un ressort qui s'engage au niveau du levier d'actionnement (31).

12. Support selon l'une des revendications précédentes, **caractérisé en ce que** la tête articulée (16) et le manchon (18) sont fabriqués en une pièce.

13. Support selon l'une des revendications précédentes, **caractérisé en ce que** le coussinet à rotule (13) est exécuté en forme de coque et sa surface externe proche de l'ouverture (14) par laquelle dépasse le manchon (18) de la tête articulée (16) s'étend essentiellement parallèlement à la surface interne.

14. Support selon l'une des revendications précédentes, **caractérisé en ce que** la tête articulée (16) et le manchon (18) sont fabriqués en matière synthétique et **en ce que** le coussinet à rotule (13) est fabriqué dans un métal.
